# EUROPEAN PATENT APPLICATION

(11) **EP 3 109 832 A1**
(43) Date of publication of application: **28.12.2016**
(21) Application number: 15173565.1
(22) Date of filing: 24.06.2015
(51) Int. Cl.: G06T 19/00, G06T 11/00

(54) **INTERACTIVE INFORMATION SYSTEM FOR SHARED AND AUGMENTED INTERACTIVE REALITY**

(71) Applicant: Atos IT Solutions and Services GmbH, 81739 München (DE)
(72) Inventor: Bierhoff, Thomas, 33106 Paderborn (DE)
(74) Representative: Patentanwaltskanzlei WILHELM & BECK

(57) **Abstract**

A system comprises a mobile electronic device for a person and a server system. In this, the mobile electronic device comprises a display for presenting visual information to the person, a camera for capturing a video image of a field of view of the person, a processing unit to render a video image into the display, and a communication interface for sending and receiving video images over a wide area network. The server system is remote to the mobile electronic device and adapted to communicate over the wide area network. The server system is adapted to receive a video image from the mobile electronic device, recognise an object and its spatial alignment within the received video image, retrieve model information about the object from a model data store, generate a video image of a graphic representation of the object, based on the model information and the received video image, and transmit the generated image back to the mobile electronic device via the wide area network. The display of the mobile electronic device is adapted to present the image received from the server system to the person.

## Description

Present invention concerns an interactive information system for shared and augmented interactive reality delivered by remote services.

A mobile electronic device comprises a video camera that captures a video imageof a field of view of the person. The video imagemay then be processed by an attached local computer, thereby recognising an object in the person's field of view. The object may be put in relationship with model data of the object and the captured image may be overlaid a graphic representation of the object or one of its features. In this way, additional information of the object may be made visible to the person. A service technician, for example, may thus be assisted during work on a machine.

However, the augmentation capabilities of the mobile computer are generally limited by its small battery supply, limited computing power and to the amount and quality of the model information being stored locally. When deploying computer vision technologies (e.g. SLAM, edge detection, natural feature extraction, etc.) continuously to identify objects in the field of view on the mobile electronic device, its battery supply will drop drastically which is not compliant to industry processes and standards (e.g. 8 hours shift operation). Should the locally available model information be insufficient, the aid to the person may be limited.In the above example of the field technician frequent changes may be made to the machine so that the servicing information must be updated regularly. While updating the model data on demand may be technically feasible, an institution in possession of the relevant data, i.e. a manufacturer of said machine, may be reluctant to readily share the latest model information with a field technician. Generally, the release of model information is the product of a review process that makes sure that classified and internal information is not published.

Present invention sets out to provide an improved technology for controlling a mobile electronic device of the indicated kind. The invention solves the given objective through the articles defined in enclosed independent claims. Dependent claims give preferred embodiments.

A system comprises a mobile electronic device for a person and a server system. In this, the mobile electronic device comprises a display for presenting visual information to the person, a video camera for capturing a video image of a field of view of the person, a processing unit to render a video image into the display, and a communication interface for sending and receiving a video image over a wide or local area network. In the following the term network is used as a synonym for both types of networks.

The presented technology may permit augmenting the reality interactively and context-wise in the digitalized field of view of a mobile electronic device (e.g. a head mounted display, a tablet, a smart phone or the like). Deploying powerful computing services and using large information stores in remote data centres may be made possible. By the proposed technique, their tremendous information pools and computing power may delivered via services directly into the field of view of the physical workspace through IP based local or wide area network communication.

The server system is preferred to be remote to the mobile electronic device and adapted to communicate over the network. After login procedure the mobile electronic device may be granted access to remote services on the server system, providing computer vision analytics for recognizing context-wise objects in the video image. The context information (e.g. work instruction, sensor and location data, etc.) is usually provided by the mobile electronic device to the remote service to support the computer vision analytics (pre-filtering of potential models and information).

The server system is preferred to be adapted to receive a video image from the mobile electronic device, analyses it in order to recognize one or multiple objects and their spatial alignments in parallel and real time within the received video image, retrieve context-sensitive model information referenced by the provide context about the object from a model data store, generate in response a video image of a graphic of the object representation (e.g. scalable, rotatable and transformable 3-D model), based on the model information and the received video image, and transmit the generated image and possibly its context related information back to the mobile electronic device via the network. The display of the mobile electronic device is adapted to present the image and the overlaid information received from the server system to the person.

The person may interact with the image (e.g. by touch pad- or IR-finger tracking control, etc.) digitally to evoke other services to request further information, to confirm work flow steps or to gain control over physical entities. Latter one can be achieved by retrieving a unique identification code from visually read bar- or QR codes attached to a physical entity to access physical control by back end services if the entity is connected and provides appropriate interfaces for control. By this the user experiences a digital enriched reality in which he can interact with. Also sharing the field of view with other remote digital displays is given as the remote server can distribute the incoming video streams to other remote and authorized clients. Among others this represents the base for remote collaboration.

One benefit of the service orientated computation is the outplacement of high energy consuming computer vision analytics to remote services prolonging the operation time of the mobile electronic device significantly in terms of energy supply. Furthermore the service can be split easily into multiple instances by a master service to support parallel computing if more than on object needs to be tracked and augmented in the field of view.

Another benefit of said system is that model information need not be shared with a person remote from the server system or with that person's local computer. For instance, a manufacturer may chose to lay open design information about the object and still rest assured that only visually rehashed information will be disclosed to the mobile electronic device or the person. This may protect the manufacturer for instance from illegal copying of his products.

It is preferred that the server system is configured to add to the generated video image a graphic representation of extra object information. In one embodiment a hidden feature such as an inside view of the object may be generated. In another embodiment a graphic indicator for a recommended action (e.g. "dismantle object") or a graphic indication of a missing part may be given.

The extra information may be retrieved from a source different from or additional to the data store. Especially, it is preferred that the server system is adapted to retrieve model information about the object from distributed model data stores.

This may help broaden the base from which information is drawn and used to generate the graphic representation of the object. In one embodiment, a search on one or several databases may be conducted, such as to combine information about the object from different sources. The search may be recursive so that features found from one source may generate additional queries. This may be similar to a person manually searching the internet, retrieving publicly available information and combining it to generate improved. In this case, the search may be automated and the found information may be accumulated accordingly. Through this feature information that was disclosed for example in a product picture, a shared video, in a newsgroup or in a retailer's booking system may be used.

The extra information is preferred to be invisible to the naked eye of the person. The extra information may for instance hint at a source of danger like a hot surface, a sharp edge or a high voltage. The extra information may also comprise a physical value like a dimension of the object. Other information like a price, ordering information, shipping time or availability of a replacement part may also be given. Such information may otherwise have to be acquired in a complex process or with the use of an integrated system that may be restricted to certain disclosures only.

The extra information may be spatially aligned to the recognized physical object. This may especially be done using projection matrices. The person may thus have the impression of true augmented reality in that he can change his perspective and the perspective of the superimposed information will follow.

In a preferred embodiment, a series of images is processed in a video stream. A frequency of images may be chosen such that the person has the impression of a real-time application, that is, a maximum time delay between transmitting a raw image and receiving the processed image may not exceed a predetermined maximum time.

The server may also be adapted to determine the object's position and orientation. Model data may thus be generated for the resulting view or perspective.

In yet another embodiment, the server is adapted to recognise on the received video image a user-controlled pointer in relation to the generated object representation and change the object representation in accordance with the relation. The pointer may for instance be a finger or a tool the person manipulates. The person may thus be better supported in performing a given task with the object.

In one variant, the received video image is superimposed on a direct view of the person on the object. This technique is also called "augmented reality" (AR). Augmented reality allows a digital enhanced view of the real world by aligned visualization overlays within a semi transparent display. The user sees the reality live with digital enhancements. In another variant, the received video image replaces a direct view of the person on the object, which is called Augmented Video Reality (AVR). Augmented Video Reality represents an aligned visualization overlay of a video stream capturing the reality. The user sees a video of the reality with digital enhancements. Unless noticed otherwise, present invention covers both alternatives.

The mobile electronic device and the server are preferred to be adapted to transmit the video image in compressed and encrypted form (e.g. binary transmission using Protobuf protocols). Bandwidth of the wide area network connecting the mobile electronic device with the server system may thus be saved.

A method for controlling the above-indicated mobile electronic device for a person from said server system comprises steps of transmitting, from the mobile electronic device to the server, a video image, of recognising, by the server, an object and its spatial alignment within the received video image, of retrieving, by the server, model information about the object from a model data store, of generating, by the server, a video image of a graphic representation of the object, based on the model information and the received video image, and transmitting back, from the server to the mobile electronic device, the generated image via the wide area network, and of presenting, through the display, the image received from the server system to the person.

A computer program product comprises program code means for executing the above given method when the computer program product is run on the server or stored on a computer readable medium.

### Brief summary of the figures

The invention shall now be explained in more detail, making reference to the included figures in which:
- Figure 1: shows a schematic view of a system with a mobile electronic device and a server system; and
- Figure 2: shows example views through the mobile electronic device of Fig. 1.

### Detailed discussion of exemplary embodiments

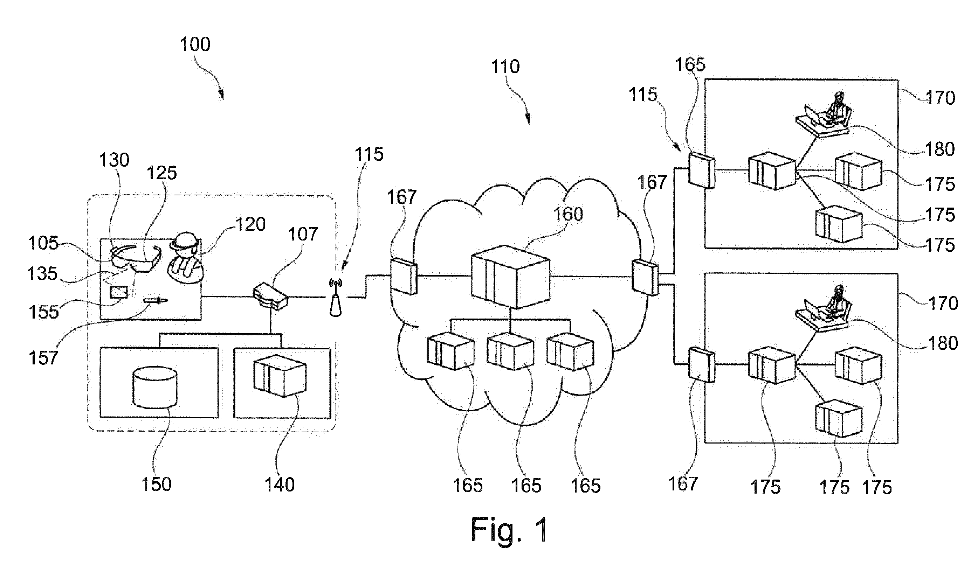

Fig. 1 shows a schematic view of a system 100. The system comprises a mobile electronic device 105, for instance head mounted display (aka. headset), a tablet computer, a smart phone or a similar device, and a server system 110. The mobile electronic device 105 comprises a communication interface 107 for connecting to a computer network 115 that permits communication with computer system 110. The mobile electronic device 105 is designed to be worn or used by a person 120 and comprises a display 125 for presenting visual information for the person 120, a camera 130 for capturing a video image of a field of view 135, a processing unit 140 as well as a communication interface 145 for connection with the network 115. Through the communication interface 145 images may be transmitted and received to or from the server system 110 through the network 115.

In the shown exemplary embodiment the network 115 comprises a stretch of wireless network and another stretch of wired network. However, in different embodiments only one kind of network or a more complex arrangement of different kinds of networks may be used. The network 115 is preferred to allow wide area communication and may for instance utilize the internet or a wireless packet network. The local processing unit 140 may be attached to other components of the mobile electronic device 105 via the network 115 or it may be integrated with other components of the mobile electronic device 105. In a preferred embodiment the mobile electronic device 105 is designed to be attached to or worn on the head of person 120. In this case, the processing unit 140 may for instance be attached to a frame of the mobile electronic device 105.

The mobile electronic device 105 may also comprise a local data storage 150, which may be attached to the processing unit 145 via the network 115. The camera 130 of the mobile electronic device 105 captures an image of an object 155 in the field of view 135 of the person and the processing unit 140 analyses the image for features. After recognising the object 155 and determining its spatial alignment it may query the local data storage 150 for model information about the object 155. Using this information, a graphic representation of a feature of the object 155 may be overlaid to the captured image and the resulting image may be presented to the person 120 via the display 125.

Instead or in addition to the object 155, a pointer 157 that can be controlled by the person 120 may be recognized and its spatial alignment may be determined. In one embodiment, the pointer 157 may be a tool like a pencil or a soldering iron; in another embodiment it may comprise a finger or another extremity of person 120. In one embodiment there may be provided an additional or alternative user control to interact with the video image. Thus, the presented video image or video stream may be interactive to the person 120.

The overlaid graphic representation of the feature of the object 155 is based on model information about the object 155 and may especially comprise information that is invisible to the naked eye of person 120. For instance, identification or physical properties of the object 155 may be shown. The person 120 may use the pointer 157 for virtually manipulating the overlaid information or the displayed object 155 such as to reveal more or different information that will be displayed in the same manner.

It is proposed that this concept is taken further by essentially replacing local processing in the processing unit 140 by remote processing in server system 110. The captured image of the field of view 140 is transferred to the server system via the network 115 and the server system analyses it. Upon recognition of an object 155 or the pointer 157 it may supply additional information in a graphical way and transfer an image composed of the original image and the graphical information back to the mobile electronic device 105. This process is preferred to run on a sequence of images or a video stream. Image rates may be as high as 50 Hz or above to enable a smoothly moving picture to the person 120. It is also preferred that the cycle of image capturing, transferring to the server system, augmenting it with model information, transferring an overlaid image back and displaying it to the person 120 will not cause more delay that a predetermined threshold. Such an operation is known as real time processing. An example maximum delay may have a magnitude of tens of milliseconds top hundreds of milliseconds. If possible the delay will be below one second.

It is furthermore preferred that the system 100 will support interactive operation. In this mode, the person 120 performs a manipulation of the object 155, the mobile electronic device 105 or the pointer 157 and the displayed augmented information reacts on the manipulation. For instance, virtual touching of a part of the augmented digital content may request further information from the server system 110. This may imply static or dynamic information (status information, warnings, etc.)

The server system 110 comprises a remote processing unit 160 and may also comprise or be attached to a remote data storage 165. The processing unit 160 may optionally be adapted to perform a rights management system such as to determine what kind of information in the data storage 165 will be interpreted or rendered in which way and if and how it is graphically presented to the person 120. The data storage 165 may for instance comprise comprehensive data of the object 155, including drawings, wiring diagrams, manufacturing methods, material choices and pricing information. However, a person 120 may only be presented graphical information on servicing the object 155. This may for instance be limited to expected signals on certain points of a printed circuit for diagnosis and item replacement information. It is therefore no longer necessary make a choice between disclosing all available information on an object 155 and manual preparing dedicated public information from the comprehensive information. The selection and transformation of said information may instead be done on the fly through processing unit 140. In order to further protect the information, a firewall 167 may be utilized that filters the network traffic between the mobile electronic device 105 and the server system 110.

It is furthermore proposed to adapt the server system 110 to retrieve information from one or more other repositories 170. These repositories 170 may be local to the server system 110 or attached through another network 115 to which the above given options may apply. Each repository 170 may comprise one or several data storages 180 from which model information about the object 155 may be drawn. Between the server system 110 and each of the repositories 170 additional firewalls 167 may be installed. Another level of rights management system may be active on one of the repositories 170. Each repository 170 may allow drawing surplus information from another person in the role of an instructor 180. This person may be a local expert, an instructor or a supervisor. The image displayed to the user 120 may be used like a whiteboard on which the expert draws information in order to support the person 120.

The instructor 180 and the person 120 may dialogue with each other and the instructor may see a copy of the image that is displayed to the user 120. The user 120 and/or the instructor 180 may change the transferred image such as to draw the attention of the other person 120, 170 to a certain detail, feature or behaviour. This may comprise an annotation in graphic and/or acoustic form. In another embodiment, an image or a sequence of images may be archived for later analysis. An instructor 180 may for instance go over the actions of person 120 in a reviewing stage.

It is preferred that the processing unit 160 of server system 110 is adapted to chose one or more repositories 170 for query on the basis of the recognized object features. This may be carried in a way similar to a picture search in a web-based search service like Google or Yahoo. It is especially preferred that the processing unit 160 is adapted to do a recursive search for model information on the object 155.

In one embodiment, model data from different repositories 170 may be put together in one hierarchical model that supports the cross linking of data. This superordinate model is preferred to have the shape of a tree in which branches represent the different repositories and leaves represent model or feature information.

Retrieved model information may be aggregated by the processing unit 160 in order to further enrich the received image with additional information.

Processing unit 160 may also be adapted to restrict the search by extended information that may for instance be available about person 120, the mobile electronic device 105, the object 155 or the task at hand. For instance, the search may be based on a preferred locale, a predetermined geographic location of the person 120 (which may for instance be determined with a GPS receiver attached to the mobile electronic device 105) or a specific maintenance or servicing task at the hands of the person 120. In this way, different kinds of information may be kept separate, such as not to confuse the person 120 and not to reveal more information than necessary. The same object 155 may also be supplied with different information depending on an identification number, which may be unique.

In another embodiment one feature or object 155 may be replaced by a virtual control panel, that is, a graphic representation of an area which can be touched in order to change the displayed information or an operation of a contraption like the object 155, the pointer 157 or a part of a distributed control system. For instance, a barcode or a QR-code on the image may be recognised and be virtually replaced by a touch-sensitive button, a dial or another control surface that can be manipulated by the person 120. The graphical codes may be printed on items the person 120 may arrange within his field of view 135. Alternatively they may also be attached to the object 155 or its environment. The graphical codes may be unique so that access to the functions they represent may be coupled to seeing them through the mobile electronic device 105.

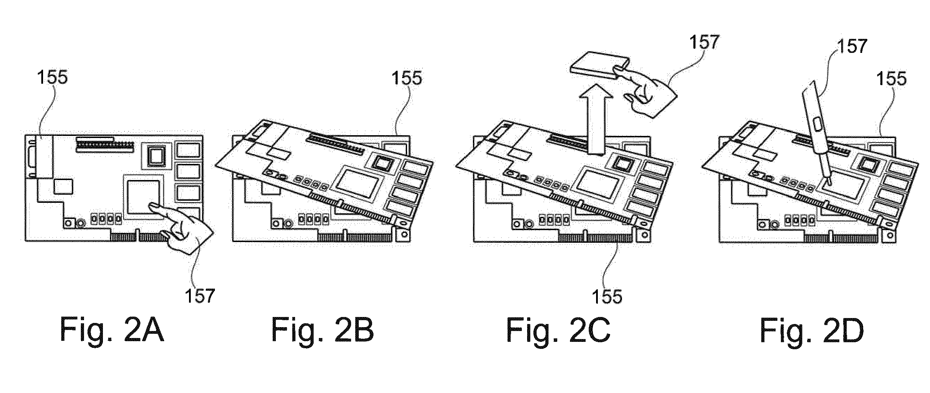

Fig. 2 shows example views through the mobile electronic device 105 of Fig. 1. The object 155 used in this example comprises a printed circuit board. In Fig. 2A a central integrated circuit, which represents a feature of the board 155, is recognised and its graphical representation on the image visible to the person 120 is replaced by an enlarged picture, highlight with a rectangle. More information about the integrated circuit may be displayed in the same location. The person 120 may use his hand as pointer 157 to touch the overlaid information, thereby potentially triggering a function.

In Fig. 2B the overlaid information is changed in perspective through interactive commands of the person 120. For clarity, the pointer 157 is not shown in Fig. 2B. Additional information like a maximum clock speed of the integrated circuit may also be displayed. The original image with the non-virtual object 155 may stay visible in the background of the overlaid image of the virtual information.

In Fig. 2C, the person uses the pointer 157 to remove the virtual integrated circuit from the virtual object 155. The overlaid information, based on model data of the object 155, may then give more information about a feature that was hidden underneath the integrated circuit. In present case, this may comprise a servicing instruction like the replacement of a resistor soldered there.

In Fig. 2D a virtual servicing, operation or maintenance action is carried out on the virtual object 155. This may be controlled by the person 120, such as to rehearse the real action, or it may be part of an instruction video or image sequence in order to prepare the person 120 for the intervention on the real object 155.

## Claims

1. System (100), comprising:
- a mobile electronic device (105) for a person (120), wherein the mobile electronic device (105) comprises:
• a display (125) for presenting visual information to the person (120),
• a camera (130) for capturing a video image of a field of view of the person (120),
• a processing unit (140) to render a video image into the display, and
• a communication interface (107) for sending and receiving video images over a wide area network (115);
- a server system (110) that is remote to the mobile electronic device (105) and adapted to communicate over the wide area network (115),
- wherein the server is adapted to:
• receive a video image from the mobile electronic device (105);
• recognise an object (155) and its spatial alignment within the received video image;
• retrieve model information about the object (155) from a model data store (165, 170);
• generate a video image of a graphic representation of the object (155), based on the model information and the received video image, and
• transmit the generated image back to the mobile electronic device (105) via the wide area network (115);
- wherein the display (125) of the mobile electronic device (105) is adapted to present the image received from the server system (110) to the person (120).

2. System (100) according to claim 1, wherein the server system (110) is configured to add to the generated video image a graphic representation of extra object (155) information.

3. System (100) according to claim 2, wherein the extra information is retrieved from a source (170) different from the data store (165).

4. System (100) according to claim 2 or 3, wherein the extra information is invisible to the naked eye of the person (120).

5. System (100) according to one of claims 2 to 4, wherein the extra information is spatially aligned to the recognized physical object (155).

6. System (100) according to one of the preceding claims, wherein the server system (110) is adapted to retrieve model information about the object (155) from distributed model data stores (170).

7. System (100) according to one of the preceding claims, wherein a series of images is processed in a video stream.

8. System (100) according to one of the preceding claims, wherein the server (110) is adapted to determine the object (155)'s position and orientation.

9. System (100) according to one of the preceding claims, wherein the server (110) is adapted to recognise on the received video image a user-controlled pointer (157) in relation to the generated object (155) representation and change the object (155) representation in accordance with the relation.

10. System (100) according to one of the preceding claims, wherein the received video image is superimposed on a direct view of the person (120) on the object (155).

11. System (100) according to one of claims 1 to 9, wherein the received video image replaces a direct view of the person (120) on the object (155).

12. System (100) according to one of the preceding claims, wherein the mobile electronic device (105) and the server are adapted to transmit the video image in compressed form.

13. Method for controlling a mobile electronic device (105) for a person (120) from a server system (110), wherein the mobile electronic device (105) comprises:
- a display (125) for presenting visual information to the person (120),
- a camera (130) for capturing video a image of a field of view of the person (120),
- a processing unit (140) to render a video image into the display, and
- a communication interface (145) for sending and receiving video images over a wide area network (115) ;
and the server system (110) is remote to the mobile electronic device (105) and adapted to communicate over the wide area network (115), the method comprising steps of:
- transmitting, from the mobile electronic device (105) to the server (110), a video image;
- recognising, by the server (110), an object (155) and its spatial alignment within the received video image;
- retrieving, by the server (110), model information about the object (155) from a model data store (165, 170);
- generating, by the server (110), a video image of a graphic representation of the object (155), based on the model information and the received video image, and
- transmitting back, from the server (110) to the mobile electronic device (105), the generated image via the wide area network (115);
- presenting, through the display, the image received from the server system (110) to the person (120).

14. Computer program product comprising program code means for executing the method according to the previous claim when the computer program product is run on the server (110) or stored on a computer readable medium.
